# EUROPEAN PATENT APPLICATION

(11) **EP 2 843 212 A1**
(43) Date of publication of application: **04.03.2015**
(21) Application number: 14180490.6
(22) Date of filing: 11.08.2014
(51) Int. Cl.: F02C 7/047, F02C 7/057, F02C 9/18, F02C 9/22

(54) **Systems and methods for controlling gas turbines**

(30) Priority: 13.08.2013 US 201313965863
(71) Applicant: General Electric Company, Schenectady, New York 12345 (US)
(72) Inventor: Jones, Trevor V., Greenville, SC 29615 (US); Seely, William Forester, Greenville, SC 29615 (US); Ewens, David Spencer, Greenville, SC 29615 (US)
(74) Representative: Illingworth-Law, William Illingworth

(57) **Abstract**

Embodiments of the disclosure relate to systems and methods for controlling a gas turbine. In one embodiment, a method 300 can be provided. Measurement data associated with the operation of a gas turbine may be received 305 to determine 310 if the current operating state of the gas turbine is associated with a predefined risk. Thereafter, the measurement data and one or more model operating parameters for operation of the inlet bleed heat system that minimizes the risk may be identified 315 in order to generate 325 one or more control signals operable to adjust the operation of the inlet bleed heat system for the gas turbine to adjust the one or more model operating parameters.

## Description

This disclosure generally relates to gas turbines, and more specifically relates to systems and methods for controlling gas turbines.

Generally, gas turbines can have control systems that monitor and control their operation. These control systems can be used to control the combustion system of gas turbines as well as other operational aspects of gas turbines. In some instances, a gas turbine may be operating for an extended period such that operational and/or component efficiencies begin to degrade that result in various deleterious effects on compressor operation and gas turbine engine performance.

Embodiments are disclosed for systems and methods for controlling gas turbines. In an embodiment, a method for controlling a gas turbine can be provided. The method can include receiving measurement data associated with the operation of a gas turbine that includes an inlet bleed heat system to maintain a temperature of an airstream entering an inlet of the gas turbine. The method can further include determining, based on the measurement data, that a current operating state of the gas turbine is associated with a predefined risk. The method can further include identifying a predefined operation model that includes model operating parameters for operation of the inlet bleed heat system that minimizes the predefined risk. In addition, the method can include determining, based on the measurement data, the current operating state of the gas turbine and the one or more model operating parameters, that the one or more model operating parameters should be adjusted. Furthermore, the method can include generating one or more control signals to adjust the operation of the inlet bleed heat system based on the adjusted model operating parameters.

In another embodiment, a system for controlling a gas turbine can be provided. The system can include a gas turbine having an inlet bleed heat system operable to maintain a temperature of an airstream entering a compressor section of the gas turbine. The system can also include one or more processors operable to receive measurement data associated with the operation of the gas turbine. The one or more processors can further be operable to determine that a current operating state of the gas turbine is associated with a predefined risk based on the measurement data. The one or more processors can further be operable to identify a predefined operation model that includes one or more model operating parameters for operation of the inlet bleed heat system that minimizes the predefined risk. The one or more processors can further be operable to determine, based on the measurement data, the current operating state of the gas turbine and the one or more model operating parameters, that one or more model operating parameters should be adjusted. The one or more processors can further be operable to generate one or more control signals to adjust the operation of the inlet bleed heat system based on the one or more adjusted model operating parameters.

In yet another embodiment, there is disclosed one or more computer-readable media storing computer-executable instructions that, when executed by a processor, make the processor operable to receive measurement data associated with the operation of a gas turbine having an inlet bleed heat system that maintains a temperature of an airstream entering an inlet of the gas turbine and determine, based on the measurement data that a current operating state of the gas turbine is associated with a predefined risk. The processor is further operable to identify a predefined operation model that includes one or more model operating parameters for operation of the inlet bleed heat system that minimizes the predefined risk. The processor is further operable to determine, based on the measurement data, the current operating state of the gas turbine and the one or more model operating parameters, that the one or more model operating parameters should be adjusted. The processor is further operable to generate one or more control signals to adjust the operation of the inlet bleed heat system based on the adjusted model operating parameters.

Other embodiments, systems, methods, features, and aspects of the disclosure will become apparent from the following description taken in conjunction with the following drawings.
FIG. 1 is a schematic representation of an example system for controlling a gas turbine according to an embodiment of the disclosure.
FIG. 2 is a block diagram an example system controller for controlling a gas turbine in accordance with an embodiment of the disclosure.
FIG. 3 is a flowchart illustrating an example method for controlling a gas turbine in accordance with an embodiment of the disclosure.
FIG. 4 is a graph illustrating an example operating model in accordance with an embodiment of the disclosure.

These implementations will now be described more fully below with reference to the accompanying drawings, in which various implementations and/or aspects are shown. However, various aspects may be implemented in many different forms and should not be construed as limited to the implementations set forth herein. Like numbers refer to like elements throughout.

The present disclosure relates to systems and methods for controlling the operation of gas turbines. In particular, certain embodiments of the disclosure can facilitate using inlet bleed heat control in order to achieve one or more objectives, such as, for instance, effectively removing ice that may have formed on gas turbine engine compressor inlet guide vanes, turndown and operating limit line compressor protection, and the like. As a result, certain embodiments can have the technical effect of controlling the performance of gas turbines and/or turbine components, thereby resulting in increased power output.

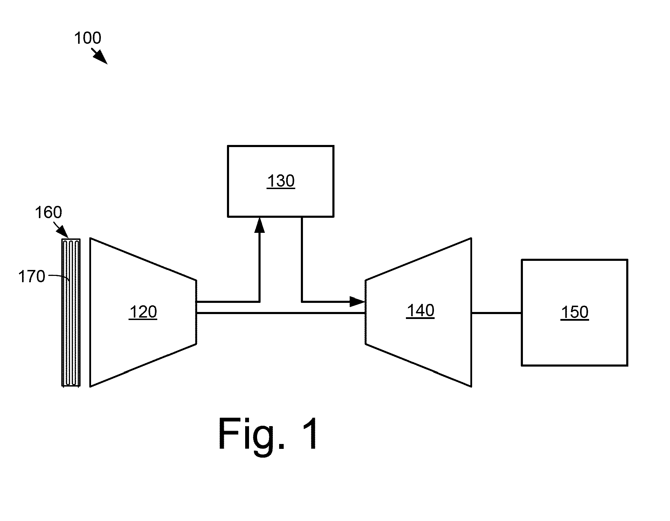

Referring now to FIG. 1, a schematic representation is shown of a system 100 for controlling a gas turbine 140 that can include a compressor 120 to compress an incoming flow of air. The compressor 120 can deliver the compressed flow of air to a combustor 130. The combustor 130 can mix the compressed flow of air with a flow of fuel and ignite the mixture. The hot combustion gases can be delivered in turn to the gas turbine 140. In operation, the gas turbine 140 can drive the compressor 120 and an external load 150 such as, for example, an electrical generator and the like. It is appreciated that the gas turbine engine 140 may have different configurations and may use other types of components. Other types of gas turbine engines also may be used herein. Multiple gas turbine engines, other types of turbines, and other types of power generation equipment also may be used herein together.

Still referring to FIG. 1, the system 100 for controlling the gas turbine 140 can further include an inlet bleed heating system 160. The inlet bleed heating system 160 can be configured to maintain a temperature of an airstream entering an inlet of the gas turbine 140. As such, the inlet bleed heating system 160 may be positioned about the compressor 120 and can be operable to heat the incoming airflow to a desired temperature. To do so, as shown in FIG. 1, the inlet bleed heating system 160 may include one or more hot water coils 170, where hot water can flow through the coils 170 and exchange heat with the incoming airflow. The inlet bleed heating system 160 may use any type of heat exchange device.

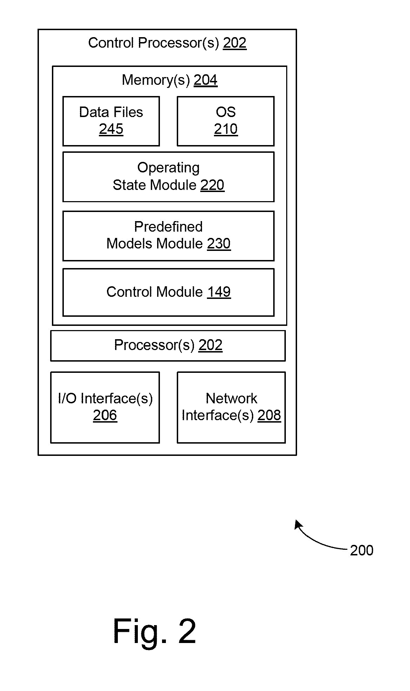

Referring now to FIG. 2, a control system 200 may be employed to generally control the operation of the gas turbine 140 and/or the inlet bleed heating system 160 depicted in FIG. 1. The control system 200 shown may be configured to communicate with the system 100 by way of any mode of communication, such as wired and/or wireless communication. According to certain embodiments, the control system 200 may be operable to receive measurement data associated with one or more operating conditions of a gas turbine, such as 140. For instance, the control system 200 may be operable to receive measurement data from one or more sensors measuring one or more operating conditions of the gas turbine 140, such as, for example, an inlet temperature, an angle of the inlet guide vanes, a dew point temperature based at least in part on the ambient temperature or a humidity temperature, and potentially other measurement data. Based on such measurements, the control system 200 may determine if the current operating state of the gas turbine 140 is associated with a predefined risk, such as, for instance, ice formation accumulation on the inlet of the gas turbine as well as other potential risks associated with turndown and operating limit line compressor protection, and the like.

Additionally, the control system 200 may be used to schedule the operation of the inlet bleed heating system 160. To do so, the control system 200 may identify one or more predefined operation models that can include any number of model operating parameters for operating of the inlet bleed heat system 160 of the gas turbine 140 in order to minimize the predefined risk. Based on the measurement data, the current operating condition of the gas turbine140 and/or the model operating parameters, the control system 200 can be operable to determine an adjustment of the model operating parameters and generate one or more control signals that adjust the operation of the inlet bleed heat system 160 based on the adjusted modeled operating parameters, which significantly impact the output and efficiency of the gas turbine.

Still referring to FIG. 2, the control system 200 may include one or more control processors 202, one or more memories 204, one or more input/output ("I/O") interfaces 206, and one or more network interfaces 208. The controller system 200 may include other devices not depicted, according to other embodiments of the disclosure.

Each control processor 202 may include one or more cores and can be configured to access and execute at least in part computer-executable instructions stored in the one or more memories 204. The one or more memories 204 can include one or more computer-readable storage media ("CRSM"). The one or more memories 204 may include, but are not limited to, random access memory ("RAM"), flash RAM, magnetic media, optical media, and so forth. The one or more memories 204 may be volatile in that information is retained while providing power or non-volatile in that information is retained without providing power.

The one or more I/O interfaces 206 may also be provided in each processor 202. These I/O interfaces 206 can allow for coupling a variety of input and/or output devices such as sensors, keyboards, mice, monitors, printers, external memories, and the like.

The one or more network interfaces 208 may provide for the transfer of data between the one or more processors 202 and another device directly such as in a peer-to-peer fashion, via a network, or both. The network interfaces 208 may include, but are not limited to, personal area networks ("PANs"), wired local area networks ("LANs"), wide area networks ("WANs"), wireless local area networks ("WLANs"), wireless wide area networks ("WWANs"), and so forth. The network interfaces 208 may utilize acoustic, radio frequency, optical, or other signals to exchange data between the one or more processors 202 and another device such as a smart phone, a tablet computer, a wearable computer, an access point, a host computer, and the like.

The one or more memories 204 may store computer-executable instructions or modules for execution by the one or more processors 202 to perform certain actions or functions. The following modules are included by way of illustration, and not as a limitation. Furthermore, while the modules are depicted as stored in the one or more memories 204, in some implementations, these modules may be stored at least in part in external memory which is accessible to the one or more processors 202 via the network interfaces 208 or the I/O interfaces 206. These modules may include an operating system (OS) module 210 configured to manage hardware resources such as the I/O interfaces 206 and provide various services to applications or modules executing on the one or more processors 202.

An operating state module 220 may be stored in at least one memory 204. The operating state module 220 may be configured to continuously and/or periodically acquire measurement data associated with the operation of a gas turbine. In certain embodiments, the measurement data may be received from, for instance, one or more sensor devices monitoring the operation of a gas turbine. In one embodiment, the operating state module 220 can be configured to determine, based in part on the measurement data, whether the inlet bleed heat system is turned on or off and/or potentially other data, if the current operating state of a gas turbine is associated with one or more predefined risks, such as, for instance, a risk of ice formation accumulating on the inlet of the gas turbine, a risk associated with turndown conditions of the gas turbine, and the like. The operating state module 220 may store the measurement data in one or more data files 245.

A predefined models module 230 may be configured to identify a predefined operation turbine model that can include one or more model operating parameters for operation of the inlet bleed heat system that minimizes the one or more predefined risks. Similar to the measurement data, the one or more model operating parameters may include a modeled ambient temperature, a modeled inlet temperature, a modeled angle of the inlet guide vanes, a modeled dew point temperature, and other data. The predefined models module 230 may store the model operating parameters in one or more data files 245.

Lastly, the control module 240 may be configured to determine if the one or more model operating parameters should be adjusted based in part on the measurement data, the current operating condition of the gas turbine and the model operating parameters. In certain embodiments, the control module 240 may then generate one or more control signals to adjust the operation of the inlet bleed heat system 160 of the gas turbine 140 based on the adjusted model operating parameters.

The one or more processors 202 described above with reference to FIG. 2 are provided by way of example only. As desired, numerous other embodiments, systems, methods, apparatus, and components may be utilized in accordance with certain embodiments of the disclosure

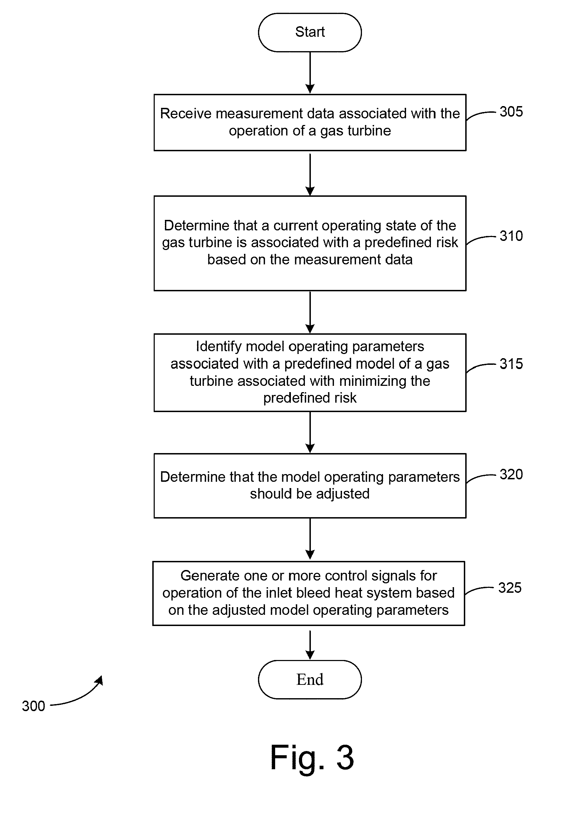

FIG. 3 illustrates by way of a flowchart an example method for controlling a gas turbine in accordance with an embodiment of the disclosure. The method 300 may start in block 305.

In block 305, a processor may receive measurement data associated with the operation of a gas turbine. For example, in at least one embodiment, a processor, such as processor 202 in FIG. 2, can receive measurement data associated with operation of a gas turbine, such as gas turbine 140 in FIG. 1. The measurement data may be received from one or more sensors positioned in, for instance, the compressor 120 and the gas turbine 140. In at least one embodiment, the measurement data may include an ambient temperature, an inlet temperature, an angle of the inlet guide vanes, a dew point temperature based at least in part on the ambient temperature and/ or a humidity temperature, and potentially other data.

In block 310, a processor may analyze the measurement data received in block 305 and determine that the current operating state of the gas turbine is associated a predefined risk, such as, for example, the risk of ice formation accumulation on the inlet of the gas turbine, the risk of compressor failure, and the like. For instance, in at least one embodiment, a processor, such as processor 202 in Fig. 2, may be analyze the measurement data in order to determine if the current operating state of the gas turbine is associated with a preefined risk, such as, the risk of ice formation accumulation on the inlet of the gas turbine.

In block 315, a processor, such as processor 202 in FIG. 2, may identify a predefined operation model comprising one or more model operating parameters that minimizes the predefined risk associated with the current operation of the gas turbine as determined in block 310. The one or more modeling operating parameters may be used to control the operation of the inlet bleed heat system, such as the inlet bleed heat system 160 in FIG. 1.

In block 320, a processor may adjust the one or more model operating parameters associated with a predefined operation model, such as, the predefined operating model identified in block 315, based at least in part on measurement data, such as the measurement data received in block 305, a current operating state of the gas turbine as determined in block 310, the one or more model operating parameters, and potentially other data. For example, a processor, such as processor 202 in FIG. 2, may determine that the model operating parameters needs to be adjusted by comparing the one or more model operating parameters associated with the predefined model to the measurement data associated with the current operating state of the gas turbine. In at least one embodiment, the processor may determine that the one or more model operating parameters need to be adjusted based on if an inlet bleed heat system is currently on or off.

In block 325, a processor may generate one or more control signals to adjust the operation of an inlet bleed heat system based at least in part on the adjusted model operating parameters as determined in block 320. In at least one embodiment, a processor, such as processor 202 in FIG. 2, may generate one or more control signals that are operable to turn the inlet bleed heat system, such as inlet bleed heat system 160 in FIG. 1, on, off, or to adjust the temperature setting of the inlet bleed heat system, and the like.

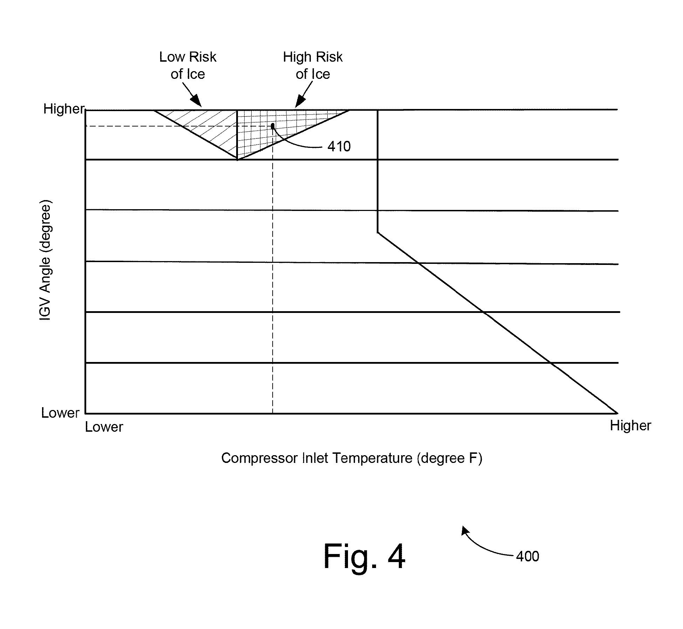

Referring now to FIG. 4, shown is a graph 400 illustrating an example operating model in accordance with an embodiment of the disclosure. In certain embodiments, a control system, such as, control system 200 in FIG. 2, may be operable to plot measurement data on the graph 400 in order to determine that the current operating state of the gas turbine is associated with a predefined risk, such as, for example, a high risk of ice formation accumulation on the inlet of the gas turbine. As shown in FIG. 4, the control system 200 may receive measurement data that includes a compressor inlet temperature, such as approximately 8 degrees Fahrenheit, and an IVG angle, such as approximately 86 degrees. Based on the measurement data, the control system 200 may then generate and plot reference point 410 on the graph 400 to determine that reference point 410 falls within a region associated with a high predefined risk of ice formation accumulation on the gas turbine inlet. In this example, the control system 200 may then be operable to generate one or more control signals to adjust the operation of the inlet bleed heat system in order to move the operation of the gas turbine into a closest region associated with a low predefined risk of ice formation accumulation on the gas turbine inlet.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed. Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, can be implemented by processor-executable program instructions. Likewise, some blocks of the block diagrams and flow diagrams may not necessarily need to be performed in the order presented, or may not necessarily need to be performed at all, according to some implementations.

These processor-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These program instructions may also be stored in a computer-readable storage media or memory that can direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

Various aspects and embodiments of the present invention are defined by the following numbered clauses:
1. A method for controlling a gas turbine, the method comprising:
   receiving measurement data associated with the operation of a gas turbine, the gas turbine comprising an inlet bleed heat system configured to maintain a temperature of an airstream entering an inlet of the gas turbine;
   determining that a current operating state of the gas turbine is associated with a predefined risk;
   identifying a predefined operation model that comprises model operating parameters for operation of the inlet bleed heat system that minimizes the predefined risk;
   determining, based at least in part on the measurement data, the current operating state and the one or more modeling operating parameters, that the one or more model operating parameters should be adjusted; and
   generating one or more control signals to adjust the operation of the inlet bleed heat system.
2. The method of clause 1, wherein the measurement data comprises at least one of: (i) an ambient temperature, (ii) an inlet temperature, (iii) an angle of the inlet guide vanes, or (iv) a dew point temperature based at least in part on the ambient temperature or a humidity temperature.
3. The method of any preceding clause, wherein determining that a current operating state of the gas turbine is associated with a predefined risk is further based at least in part on whether (i) the inlet bleed heat system is on or (ii) the inlet bleed heat system is off.
4. The method of any preceding clause, wherein the predefined risk comprises at least one of (i) ice formation accumulating on the inlet of the gas turbine or (ii) equipment failure.
5. The method of any preceding clause, wherein the one or more model operating parameters comprises at least one of: (i) a modeled ambient temperature, (ii) a modeled inlet temperature, (iii) a modeled angle of the inlet guide vanes, or (iv) a modeled dew point temperature.
6. The method of any preceding clause, wherein determining, based at least in part on the measurement data, the current operating state and the one or more model operating parameters, that the one or more model operating parameters should be adjusted comprises comparing the measurement data to the one or more model operating parameters.
7. The method of any preceding clause, wherein determining, based at least in part on the measurement data, the current operating state and the one or more model operating parameters, that the one or more model operating parameters should be adjusted comprises (i) determining that the temperature of the airstream should be increased or (ii) determining that the temperature of the airstream should be decreased.
8. The method of any preceding clause, wherein the one or more control signals comprises at least one signal operable to: (i) turn the inlet bleed heat system on or (ii) turn the inlet bleed heat system off. , (iii) adjust the angle of the inlet guide vanes or (iv) adjust the airflow.
9. The method of any preceding clause, wherein the one or more control signals comprises at least one signal operable to adjust the angle of the inlet guide vanes.
10. A system for controlling a gas turbine, comprising:
   a gas turbine that comprises an inlet bleed heat system configured to maintain a temperature of an airstream entering a compressor section of the gas turbine; and
   at least one processor configured to:
      receive measurement data associated with the operation of a gas turbine;
      determine that a current operating state of the gas turbine is associated with a predefined risk based at least in part on the measurement data;
      identify a predefined operation model comprising model operating parameters for operation of the inlet bleed heat system that minimizes the predefined risk;
      determine, based at least in part on the measurement data, the current operating state and the one or more model operating parameters, that one or more model operating parameters should be adjusted; and
      generate one or more control signals to adjust the operation of the inlet bleed heat system based at least in part on the one or more adjusted model operating parameters.
11. The system of any preceding clause, wherein the measurement data comprises at least one of: (i) an ambient temperature, (ii) an inlet temperature, (iii) an angle of the inlet guide vanes, or (iv) a dew point temperature based at least in part on the ambient temperature or a humidity temperature.
12. The system of any preceding clause, wherein determining that a current operating state of the gas turbine is associated with a predefined risk is further based at least in part on whether (i) the inlet bleed heat system is on or (ii) the inlet bleed heat system is off.
13. The system of any preceding clause, wherein the one or more model operating parameters comprises at least one of: (i) a modeled ambient temperature, (ii) a modeled inlet temperature, (iii) a modeled angle of the inlet guide vanes, or (iv) a modeled dew point temperature.
14. The system of any preceding clause, wherein determining, based at least in part on the measurement data, the current operating state and the one or more model operating parameters, that one or more model operating parameters should be adjusted comprises comparing the measurement data to the one or more model operating parameters.
15. The system of any preceding clause, wherein determining that one or more model operating parameters should be adjusted comprises (i) determining that the temperature of the airstream should be increased or (ii) determining that the temperature of the airstream should be decreased.
16. The system of any preceding clause, wherein the one or more control signals are configured to control the flow of the airstream entering the compressor section.
17. The system of any preceding clause, wherein the one or more control signals comprises (i) at least one signal operable to turn the inlet bleed heat system on or (ii) at least one signal operable to turn the inlet bleed heat system off.
18. The system of any preceding clause, wherein the one or more control signals comprises at least one signal operable to adjust an angle of the inlet guide vanes.
19. One or more computer-readable media storing computer-executable instructions that, when executed by at least one processor, configure the at least one processor to:
   receive measurement data associated with the operation of a gas turbine, the gas turbine comprising an inlet bleed heat system configured to maintain a temperature of an airstream entering an inlet of the gas turbine;
   determine that a current operating state of the gas turbine is associated with a predefined risk based at least in part on the measurement data;
   identify a predefined operation model comprises model operating parameters for operation of the inlet bleed heat system that minimizes the predefined risk;
   determine, based at least in part on the measurement data, the current operating state and the one or more model operating parameters, that the one or more model operating parameters should be adjusted; and
   generate one or more control signals to adjust the operation of the inlet bleed heat system based at least in part on the one or more adjusted operating parameters.
20. The computer-readable media of any preceding clause, wherein the measurement data comprises at least one of: (i) an ambient temperature, (ii) an inlet temperature, (iii) an angle of the inlet guide vanes, or (iv) a dew point temperature based at least in part on the ambient temperature or a humidity temperature.

## Claims

1. A method (300) for controlling a gas turbine, the method comprising:
receiving (305) measurement data associated with the operation of a gas turbine, the gas turbine comprising an inlet bleed heat system configured to maintain a temperature of an airstream entering an inlet of the gas turbine;
determining (310) that a current operating state of the gas turbine is associated with a predefined risk;
identifying (315) a predefined operation model that comprises model operating parameters for operation of the inlet bleed heat system that minimizes the predefined risk;
determining (320), based at least in part on the measurement data, the current operating state and the one or more modeling operating parameters, that the one or more model operating parameters should be adjusted; and
generating (325) one or more control signals to adjust the operation of the inlet bleed heat system.

2. The method of claim 1, wherein the measurement data comprises at least one of: (i) an ambient temperature, (ii) an inlet temperature, (iii) an angle of the inlet guide vanes, or (iv) a dew point temperature based at least in part on the ambient temperature or a humidity temperature.

3. The method of claim 1 or claim 2, wherein determining that a current operating state of the gas turbine is associated with a predefined risk is further based at least in part on whether (i) the inlet bleed heat system is on or (ii) the inlet bleed heat system is off.

4. The method of claim 1, 2 or 3, wherein the predefined risk comprises at least one of (i) ice formation accumulating on the inlet of the gas turbine or (ii) equipment failure.

5. The method of any preceding claim, wherein the one or more model operating parameters comprises at least one of: (i) a modeled ambient temperature, (ii) a modeled inlet temperature, (iii) a modeled angle of the inlet guide vanes, or (iv) a modeled dew point temperature.

6. The method of any preceding claim, wherein determining (310), based at least in part on the measurement data, the current operating state and the one or more model operating parameters, that the one or more model operating parameters should be adjusted comprises comparing the measurement data to the one or more model operating parameters.

7. The method of any preceding claim, wherein determining (310), based at least in part on the measurement data, the current operating state and the one or more model operating parameters, that the one or more model operating parameters should be adjusted comprises (i) determining that the temperature of the airstream should be increased or (ii) determining that the temperature of the airstream should be decreased.

8. The method of any preceding claim, wherein the one or more control signals are configured to control the flow of the airstream entering the compressor section.

9. The method of any preceding claim, wherein the one or more control signals comprises at least one signal operable to: (i) turn the inlet bleed heat system on or (ii) turn the inlet bleed heat system off.

10. The method of any preceding claim, wherein the one or more control signals comprises at least one signal operable to adjust the angle of the inlet guide vanes.

11. A system (100) for controlling a gas turbine, comprising:
a gas turbine (140) that comprises an inlet bleed heat system (160) configured to maintain a temperature of an airstream entering a compressor section (120) of the gas turbine (140); and
at least one processor (202) configured to perform the method of any preceding claim.

12. A computer program comprising instructions that, when executed by a processor, perform the method of any one of claims 1 to 10.

13. One or more computer-readable media storing computer-executable instructions that, when executed by at least one processor, configure the at least one processor to:
receive measurement data associated with the operation of a gas turbine, the gas turbine comprising an inlet bleed heat system configured to maintain a temperature of an airstream entering an inlet of the gas turbine;
determine that a current operating state of the gas turbine is associated with a predefined risk based at least in part on the measurement data;
identify a predefined operation model comprises model operating parameters for operation of the inlet bleed heat system that minimizes the predefined risk;
determine, based at least in part on the measurement data, the current operating state and the one or more model operating parameters, that the one or more model operating parameters should be adjusted; and
generate one or more control signals to adjust the operation of the inlet bleed heat system based at least in part on the one or more adjusted operating parameters.

14. The computer-readable media of claim 13, wherein the measurement data comprises at least one of: (i) an ambient temperature, (ii) an inlet temperature, (iii) an angle of the inlet guide vanes, or (iv) a dew point temperature based at least in part on the ambient temperature or a humidity temperature.
